## Europäisches Patentamt
## European Patent Office
## Office européen des brevets

(11) Publication number: **0 051 945**
**B1**

(12) **EUROPEAN PATENT SPECIFICATION**

(45) Date of publication of patent specification: **30.04.86**

(51) Int. Cl.⁴: **C 08 F 14/06, C 08 F 2/18**

(21) Application number: **81304976.4**

(22) Date of filing: **22.10.81**

(54) Improved suspension process for the polymerization of vinyl chloride monomer.

(30) Priority: **07.11.80 US 204739**

(43) Date of publication of application:
**19.05.82 Bulletin 82/20**

(45) Publication of the grant of the patent:
**30.04.86 Bulletin 86/18**

(84) Designated Contracting States:
**AT BE DE FR GB IT NL SE**

(56) References cited:
**"No relevant documents have been disclosed"**

(73) Proprietor: **OCCIDENTAL CHEMICAL CORPORATION**
**P.O. Box 189**
**Niagara Falls New York 14302 (US)**

(72) Inventor: **Fitzpatrick, Stephen T.**
**Applewood Lane Box 230, R.D. 1**
**Boyertown Pennsylvania 19512 (US)**
Inventor: **Krawiec, Richard M.**
**Amity Garden Apartments 18 D Cedar House**
**Douglas Pennsylvania 19518 (US)**
Inventor: **Arnold, Raymond W.**
**1331 Sheephill Road**
**Pottstown Pennsylvania 19464 (US)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

## Description

Suspension polymerization of vinyl chloride has been widely utilized as a commercial process for more than 30 years. During this period of time numerous publications and patents have been directed to this overall process. Simplistically, aqueous suspension polymerization of vinyl chloride monomer, VCM, has been described as a system wherein said monomer is dispersed in an aqueous medium by means of vigorous agitation in the presence of a protective colloid or colloids to prevent the coalescence of monomer droplets. In addition, a thermally labile free-radical polymerization initiator (usually monomer soluble) is present.

Slurry produced as a result of the polymerization reaction can either be stripped in the reactor at a temperature below about 85°C or transferred to a hold tank for stripping. In stripping, resin is heated under vacuum to remove unreacted monomer and the stripped slurry is then dewatered and dried. Dry resin is a white, granular material having bulk density of 0.4—0.6 g/cm$^3$. Details concerning the production of vinyl chloride homopolymer, PVC, are set forth, for example, in Kirk-Othermer, Encyclopedia of Chemical Technology, Second Edition, Volume 21, PP. 373—379.

Typical prior art suspension polymerization systems and related technology are found in various publications and patents as exemplified by the following: GB—A—2,029,425A; US—A—3,042,655 and US—A—3,053,820; Encyclopedia of PVC, Volume 1, Copyright (c) 1976 by Marcel Dekker, Inc., New York and Basel, PP. 76—85; US—A—3,997,707, US—A—4,035,563 and US—A—2,840,549.

Vinyl chloride suspension polymerization has also been characterized by production of undesirable polymer buildup upon any exposed interior surface of the reaction vessel including walls, agitator and baffle. This propensity for polymer buildup has been attributed primarily to affinity of water-insoluble polymer for interior surfaces of the reaction vessel.

Recent research indicates that the structure of a suspension PVC particle is quite complex. Typical PVC particle structure is described by nomenclature developed during the 1976 Second International PVC Symposium in Lyons and follows:

Grain—The final particle produced as a result of the suspension polymerization, generally on the order of 150 μm.

Subgrains—Smaller particles which agglomerate together to form the grain typically having a size of 20—50 μm and representing a single monomer droplet in the initial suspension.

Agglomerated primary particles—Size on the order of 8 to approximately 15 μm.

Primary particles—Approximately 0.8 to 1.5 μm.

Domains—Approximately 70—200 nm in size.

Microdomains—Approximately 10—20 nm in size.

The means by which these various structures arise is not yet fully understood but is the subject of current research as reported in *J. Vinyl Tech.,* 2, 5 (1980) and J. Polym. Sci., Polym. Phys. Ed., 18, 54 (1980).

Commercially available resins are all characterized by grains which in turn consist of subgrains that have agglomerated during the polymerization. This point of agglomeration has been reported by some authors to be completed between 2—4% conversion, by others at approximately 10—20% conversion and by still others not before 30—50% conversion. Obviously, the point at which the agglomeration of subgrains into the grains begins and ends is a point of contention.

Certain controllable variables influence resin grain morphology as well. Suspending agents differently affect grain size, plasticizer absorption and bulk density as well as reactor cleanliness. Combinations of suspending agents are occasionally needed in order to produce resin with the desired characteristics.

Vessel geometry and agitator type and speed can also play a part in determining final resin properties. A limited number of experimentors report that at suitably low agitation conditions, it is possible to produce suspension polymer consisting of grains that appear to have originated as single suspended monomer droplets; c.f., SPE—38th Annual Technical Conference, New York, May 5—8, 1980, PP. 379—381. Product produced in this way is characterized by high bulk density, coarse grain size and wide grain size distribution. These large particles reportedly have no commercial value in that they consist of virtually solid PVC and cannot be properly processed or fused without extensive thermal degradation.

Numerous technologies have been directed at minimization or elimination of polymer deposition inside the polymerization vessel by the selection of exotic reactor materials and special treatments of these reactors. More recently, chemical wall coatings have become popular "clean reactor technologies". All methods reported to date focus upon easy treatment of the (apparently) inevitable wall fouling. In contrast, our invention generates a stable PVC suspension system producing PVC displaying desirable commercial characteristics while essentially eliminating polymer deposition on the interior surfaces of a polymerization vessel. In addition, the polymer grains produced by our system are characterized by substantially increased bulk density, narrow grain size distribution and a controllable median grain size. Our grains are spherical; there are no subgrains, although other morphology appears unchanged from that of typical commercial resin.

The invention provides an improved suspension polymerization process for VCM (vinyl chloride monomer), which comprises agitating an aqueous medium having vinyl chloride monomer and a free radical polymerization initiator dispersed therein, heating to initiate polymerization while maintaining agitation to the point of 80 to 95% monomer conversion, stripping residual vinyl chloride monomer and

2

then drying the poly(vinyl chloride) produced, characterised in that process solutions of (1) oil-soluble dispersed ingredients and (2) water-soluble dispersed ingredients are charged to a polymerization reactor, the phase integrity of said solutions being maintained prior to initiating agitation within said reactor, said solution (1) consisting essentially of 100 parts vinyl chloride monomer and from 0.002 to 0.2 phm of at least one free radical initiator and said solution (2) consisting essentially of 100 to 300 phm water and 0.03 to 3 phm of at least one primary suspending agent and agitation of said solution is then initiated until said initiator is uniformly dispersed therein.

In accordance with this process, PVC can be prepared having very high bulk density and spherical grain shape; at the same time reactor interior surface fouling is significantly reduced or eliminated. In essence, the process of the invention involves (1) uniform access of compositionally equivalent oil-soluble droplets to initiator, (2) simultaneous adjustment of level(s) of suspending agent(s) and agitation to provide suspension stability (protection from agglomeration) throughout the reaction such that polymer grain size distribution results directly from the monomer droplet distribution created at the start of the reaction. Normally this will mean higher level(s) of primary suspending agent(s) and lower agitation.

In the process of the invention, a technique known as "reverse charge" is utilized to polymerize vinyl chloride monomer. Reverse charge is herein defined as that system providing homogeneous mixing of oil-soluble and water-soluble ingredients in separate phases or vessels before creation of a suspension, that is the phase integrity of separate process solutions of (1) oil-soluble dispersed ingredients and (2) water-soluble dispersed ingredients is maintained prior to initiating agitation with the polymerisation reactor. It is important to note a variation of this procedure which has also proved effective: premixing oil and water-soluble materials in separate charge stages, delivering appropriate amounts of each material in a single pipe, then creating a suspension by means of a pipeline mixer before final deposition into a polymerization reactor. Our preferred embodiment is chosen because little or no modification of commercial equipment and processes is required for its utilization.

Sequence of addition of ingredients is important, but any selected sequence capable of providing compositionally uniform droplets is acceptable. Moreover, not all additions of ingredients need be made at the beginning of the reaction: for example, additional monomer can be added continuously or incrementally to this system so long as suspension stability is maintained and no significant new droplet family is generated.

Bulk addition of oil-soluble initiator to an agitated mix of monomer in the aqueous phase, a normal charge, produced poor resin in that not every monomer-containing droplet contains initiator early in the reaction. Droplets containing high concentrations of initiator can proceed to polymer at high conversion early in the reaction. This can cause abnormally large or discolored resin grains, an unacceptable result.

It has long been known that agitation is, in a large measure, responsible for establishment of the suspension droplet size distribution; suspending agent identity and level are other critical variables. Ordinarily, however, agitation is kept at a high level and suspending agent at a low level resulting in poor coverage of the initial droplet distribution. As the reaction progresses, resin grains become unstable and tend to agglomerate.

In the process of the invention agitation and suspending agent levels are such as to avoid just such agglomeration. In order to do this, certain optimizations must be carried out in a given reactor, as agitation depends not only on stirring rate and agitator design but also on reactor geometry and baffling. In our laboratory reactors, (glass or stainless steel, 1-1/2 liter capacity, inverted-T stirrer) stable batches can be obtained by charging 0.1 parts per hundred parts of monomer (phm) of a cellulosic suspending agent and by establishing suspension droplets with a 375 rpm stirring rate. Additionally, suspensions appear to be essentially unresponsive to increased stirring rate when carried beyond 20—30% conversion, and to decreased stirring rate significantly earlier.

In general, it is advisable to have a narrow grain size distribution as determined by screen analysis. The process of the invention yields a product whose grain size distribution can be more effectively controlled; normal reactions will ordinarily yield broader distributions.

Normally a mixture is heated to a preselected temperature after agitation is begun. This temperature, which controls the rate of thermolysis of the free-radical initiator and, therefore, the reaction rate, as well as the molecular weight of the resin itself, is maintained by removal of heat of reaction by any of the conventionally used procedures. These procedures include the use of condensers, cooled jacket or baffles and so on.

"Pressure drop" describes the point in a reaction when monomer concentration is no longer great enough to saturate polymer at a given temperature. Pressure drop usually occurs at greater than 70% conversion. To attain maximum bulk density, as in our preferred embodiment, the reaction is allowed to continue to higher (85—90%) conversion because it is well known that reaction conversion has a large effect upon resin porosity and bulk density. Monomer removal by conventional stripping is ordinarily made more difficult, however, by high conversion.

After stripping, resin is dewatered and dried using any conventional process, for example, by centrifugation and drum drying. Wetcake water content is inversely proportional to resin bulk density. Dried resin can then be packaged or stored in bulk.

The uniquely spherical, regular particle morphology of this resin makes it highly flowable and easy to handle. Additionally, higher extrusion rates (proportional to increased bulk density) can be obtained in

twin-screw extruders. (Such instruments are normally utilized in production of pipe, conduit or siding. This resin, however, can be utilized in the same fashion as other commercial resins for rigid application).

Free radical initiator(s) chosen can be any of the commonly utilized peroxy compounds: diacylperoxides like lauroylperoxide, decanoylperoxide, benzoylperoxide and others (although not necessarily symmetric); peroxyesters like cumylperneodecanoate, t - butylperneodecanoate, cumyl-perpivalate and others; peroxydicarbonates like isopropylperoxydicarbonate, sec - butylperoxydicarbonate, 2 - ethylhexylperoxydicarbonate, dicetylperoxydicarbonate and others (although not necessarily symmetric); azo compounds like azoisobutyronitrile and others (although not necessarily symmetric) or any essentially oil-soluble free radical initiator commonly utilized for vinyl polymerization. Initiator(s) and level(s) are selected to provide a uniform rate of reaction over the desired reaction time.

Additives can be used on a selective basis in the solution containing oil-solubles. The solution containing oil-solubles preferably contains from 0.01 to 0.5 phm of at least one secondary suspending agent such as glycerol monolaurate, sorbitan monolaurate, sorbitan monostearate, functionalized cellulosics like hydroxypropylcellulose and low hydrolysis (20—40%) poly (vinyl acetate). Other additives which can be used in the solution containing oil-solubles include antioxidants like butylated hydroxytoluene, substituted phenols, thiodipropionate esters and phosphites; and chain-transfer agents, capable of modifying polymer molecular weight, such as trichloroethylene, 1,2 - dichloroethylene, t - dodecylmercaptan and mercaptoethanol.

Primary suspending agents that can be incorporated into the solution containing water solubles include any of the commonly utilized suspending agents such as modified cellulose polymers like hydroxypropylmethylcellulose of various molecular weights, high hydrolysis (60—95%) poly(vinyl acetate), and water-soluble natural product polymers such as guar gum or gelatin.

Optional chelating agents that can be incorporated into the solution containing water-solubles, preferably in amount from 0.002 to 0.5 phm, are any of the common materials that give rise to ligands capable of binding multivalent metal ions. Examples are alkali metal or ammonium salts of ethylenediaminetetraacetic acid (EDTA) or nitrilotriacetic acid (NTA). Chelating agents are not absolutely necessary, but have been found to help maintain reactor cleanliness. Buffering systems can also be used to control pH in the aqueous phase.

VCM greater than 95% pure is utilized as monomer in the oil-soluble solution. In many commercial products recycled VCM is utilized, and our process accommodates this custom. Reaction kinetics must be optimized to account for reactive impurities in recycle streams. In fact, if a recycle stream contains less than 5% impurities, it can be utilized as monomer without further treatment, depending upon the identity of the impurities. Impurities commonly found in recycle vinyl are chain transfer agents as noted above, comonomers like vinyl acetate, acrylonitrile, esters of maleic acid, and vinylidene chloride and solvents like hexane, heptane, benzene, toluene, methanol, and acetone.

In these examples, the designated "Methocel" suspending agents are well known and commercially available from the Dow Chemical Company; they are identified as F-50; K-100 and E-50. "E", "F" and "K" represent the degree and radical of substitution. The numbers "50" and "100" represent the respective solution viscosities at 1% conc. (in mPas). The respective degrees and radicals of substitution are as follows:

E:

| | |
|---|---|
| methoxyl degree substitution | 1.8→2.0 |
| methoxyl 1% substitution | 28→30 |
| hydroxylpropylmolar substitution | .02→.31 |
| hydroxylpropyl % substitution | 7.5→12.0 |

F:

| | |
|---|---|
| methoxyl degree substitution | 1.7→1.9 |
| methoxyl 1% substitution | 27→30 |
| hydroxylpropylmolar substitution | 0.1→0.2 |
| hydroxylpropyl % substitution | 4.0→7.5 |

K:

| | |
|---|---|
| methoxyl degree substitution | 1.1→1.6 |
| methoxyl 1% substitution | 19→24 |
| hydroxylpropylmolar substitution | 0.1→0.3 |
| hydroxylpropyl % substitution | 4→12 |

# 0 051 945

Conductivity of water utilized in our unique process is dictated by end-use properties. In the absence of restrictions like resin conductivity, we have no specific requirements for water conductivity.

In our preferred embodiment, we utilize sec-butylperoxydicarbonate as initiator, sorbitan monolaurate as secondary suspending agent (when needed), hydroxypropylmethylcellulose as primary suspending agent, di-, tri- or tetrasodium or di-, tri- or tetraammonium EDTA as chelating agent, deionized water and VCM greater than 99% pure.

The following examples are representative and all parts are active parts per hundred parts of monomer (phm) unless otherwise specified.

### Example 1—Reverse charge

To a nitrogen purged 1-1/2 liter nominally hemispherical glass laboratory reactor was charged 0.11 g (0.030 phm) sec-butylperoxydicarbonate (SBP) and 350 g (100 phm) VCM. The agitator was started to mix these reagents, then stopped. Into an additional device was charged a homogeneous solution of 525 g (150 phm) deionized water, 53 g (0.15 phm) of 1% solution of hydroxypropylmethylcellulose (HPMC) (Methocel K-100, Dow Chemical Co.) and 0.18 g (0.050 phm) $Na_2$ EDTA (Versene, Dow Chemical Co.). This solution was charged, under pressure, to the reactor and layers were allowed to separate. Agitation (inverted T-bar) at 350 rpm was initiated, and steam was circulated through the reactor jacket to initiate heating. Polymerization was carried out at 55°C for 7 hours (92% conversion). The resulting resin was routinely stripped, dewatered and dried.

### Example 2—Reverse charge secondary suspending agent added

To a purged laboratory reactor was charged 0.12 g (0.034 phm) SBP, 0.53 g (0.15 phm) sorbitan monolaurate (Span 20, ICI), and 350 g (100 phm) VCM. After slight agitation, a solution of 350 ml (1.0 phm) of 1% HPMC (Methocel F-50, Dow Chemical Co.), 0.2 g $(NH_4^+)_4$ EDTA and 350 ml (100 phm) deionized water was added under pressure with the agitator stopped. Agitation at 267 rpm was reinitiated and heated was commenced. Reaction time for this batch charged at 34% solids was 4.8 hours at 55°C.

### Example 3—Reverse charge high solids

To a purged laboratory reactor was added 550 g (100 phm) VCM, and 0.2 g (0.034 phm) SBP. From a separate vessel, a solution containing 220 ml (0.4 phm) of a 1% solution of hydroxypropylmethylcellulose (Methocel K-100, Dow Chemical Co.), 0.2 g (0.036 phm) $(NH_4^+)_4$ EDTA, and 230 g (81.8 phm) deionized water was added under pressure. Agitation was initiated at 243 rpm after the layers separated. Reaction time was 4.6 hours at 55°C.

### Example 4—Reverse charge high levels of suspending agent and high agitation

Into a purged laboratory reactor was charged 350 g (100 phm) VCM and 0.143 g (0.04 phm) lauroyl peroxide. This mixture was agitated slightly, then a solution containing 630 ml (180 phm) $H_2O$, 0.200 g (0.057 phm) $(NH_4^+)_4$ EDTA and 70 ml (0.2 phm) of a 1% solution of HPMC (Methocel K-100, Dow Chemical Co.) was added. When the phases separated, agitation was begun at 615 rpm and heating was commenced. Reaction time was 7.8 hours at 62°C. and 33% charged solids.

### Example 5—Normal charge initiator charged as bulk material before addition of monomer

To a purged 1900 $dm^3$ (500 U.S. gallon) stainless steel Pilot Plant reactor equipped with retreating blade agitator and finger-type baffle was added 81.6 Kg (180 phm) deionized water, 0.017 Kg (0.037 phm) SBP, 9.1 Kg (0.2 phm) of a 1% solution of Methocel F-50 (Dow Chemical Co.), 0.026 Kg (0.057 phm) $(NH_4^+)_4$ EDTA. Agitation (60 rpm, retreating blade agitator) was carried out from 15 minutes before 45.4 Kg (100 phm) VCM was added. Reaction time was 5-1/4 hours at 55°C. and 34% charged solids. Particle size distribution was reasonably normal with the exception of a large number of coarse particles.

### Example 6—Reverse charge mixed suspending agent system

To a purged laboratory reactor was added 350 g (100 phm) VCM and 0.088 g (0.075 phm) SBP. This was slightly agitated, then 20 g (0.2 phm) of a 1% solution of HPMC Methocel F-50 (Dow Chemical Co.), 0.35 g (0.10 phm) partially hydrolyzed poly(vinyl acetate) (Alcotex 72.5, Revertex Co.) and 560 g (160 phm) deionized water were added from a pressure vessel without agitation. When the layers separated, agitation (267 rpm) was begun.

### Example 7—Pilot plant reverse charge high bulk density

To a purged 1900 $dm^3$ (500 U.S. gallon) stainless steel Pilot Plant reactor equipped with retreating blade agitator and finger-type baffle was added 1200 Kg (200 phm) deionized water, 0.60 Kg (0.10 phm) HPMC (Methocel K-100, Dow Chemical Co.) and 0.60 Kg (0.10 phm) $(NH_4^+)_4$ EDTA (Versene, Dow Chemical Co.). This was agitated slightly and then without agitation 0.60 Kg (0.10 phm) SBP and 600 Kg (100 phm) VCM were added. Agitation (80 rpm) was initiated and the reaction was carried out at 55°C. During stripping 0.11 Kg (0.02 phm) defoamer was added; this defoamer was a high efficiency hydrocarbon oil based anti-foaming agent of the silicate type.

5

Example 8—Reverse charge intermediate bulk density

This experiment was carried out as Example 7 with three exceptions: (1) 0.71 Kg (0.12 phm) Methocel F-50 was substituted for Methocel K-100; (2) reaction temperature was 57°C; and (3) agitation rate was 60 rpm.

Example 9—Control resin "normal" charge

To a purged laboratory reactor was added 0.095 g (0.027 phm) SBP, 0.1 g (0.029 phm) sorbitan monostearate (Spand 60, ICI), 19 ml (0.054 phm) of 1% solution of one hydroxypropylmethylcellulose (Methocel F-50, Dow Chemical Co.) and 12 ml (0.034 phm) of another (Methocel E-50, Dow Chemical Co.), and 600 g (171 phm) water. This mixture was stirred at 400 rpm for 5 min. VCM (350 g, 100 phm) was added and the temperature was raised to 57°C. Reaction time for this batch charged at 36% solids was 5-1/2 hrs.

Example 10—Pilot plant control "normal" charge

This example utilized the same recipe as Example 9 scaled to a 190 dm$^3$ (50 U.S. gallon) reactor. Based on 100 phm VCM, the scale-up factor was 1.32.

Resins prepared in laboratory examples were isolated by release of residual reactor pressure and three reslurries with sparge under a fume hood. Vacuum filtration and 60°C oven drying followed. Examples 7, 8 and 9 were Pilot Plant preparations that were stripped by vacuum and heat (66°C or 150°F) and dewatered and tray dried. Agitation rates differ between Pilot Plant and Research because agitator design and reactor geometry is different.

Two batches of Example 10 type resin were run in a cleaned reactor; a light film had built up on some reactor surfaces with heavy buildup on others. The next two batches run in this reactor were Example 7 type; not only was there no further buildup, but there was no evidence of the original film.

Our "45° funnel flow test" utilizes a 6-1/2 cm diameter 45° polypropylene funnel with 5 cm neck having a 0.45 cm bottom opening. This funnel is filled with resin and elapsed time for the resin to flow out of the funnel is measured. Resin is neither packed to fill the funnel nor agitated to induce flow.

Example 11

In an extrusion test, material prepared as in Example 7 was compared with commercial resin (bulk density −0.57 g/cc) in this formulation:

| Methyltinmercaptide | 0.3 phr (parts per hundred parts resin) |
| Calcium Stearate | 0.8 |
| Paraffin Wax | 1.2 |
| Polyethylene Wax | 0.15 |
| Resin | 100 |

Results are seen in Table II.

TABLE I
Results of Examples 1—10

| | 1 | 2 | 3 | 4 | 5 | 6 | 7 | 8 | 9 | 10 |
|---|---|---|---|---|---|---|---|---|---|---|
| **Screens:** | | | | | | | | | | |
| % on 40 Mesh | 0.2 | 0.4 | 5.4 | 0.2 | 24.2 | 1.2 | 0 | 1.2 | 0 | 1.2 |
| 60 | 1.3 | 1.0 | 25.2 | 0 | 9.6 | 1.2 | 0.8 | 9.7 | 7.8 | 21.3 |
| 80 | 10.0 | 3.4 | 34.8 | 0.2 | 6.3 | 2.4 | 0.9 | 17.0 | 45.2 | 46.0 |
| 100 | 23.9 | 7.0 | 13.4 | 0.2 | 10.2 | 5.4 | 0.7 | 22.9 | 27.6 | 16.0 |
| 140 | 44.4 | 47.6 | 12.2 | 1.8 | 37.4 | 58.6 | 33.8 | 39.3 | 17.0 | 13.0 |
| 200 | 14.4 | 17.6 | 6.0 | 41.0 | 9.1 | 24.8 | 36.4 | 7.5 | 3.0 | 2.4 |
| Pan | 6.2 | 22.0 | 3.8 | 57.8 | 3.2 | 7.8 | 27.4 | 2.4 | 1.0 | 0.4 |
| Bulk Density (g/ml) | 0.68 | 0.51 | 0.62 | 0.61 | 0.61 | 0.56 | 0.75 | 0.62 | 0.43 | |
| 45° Funnel Flow Time | 5.9 sec. | | | | | | | | 21.0 sec. | |

TABLE II

Results of extrusion test (Example 11)

| Resin | Commercial | Experimental |
|---|---|---|
| Bulk Density (g/cm$^3$) | 0.57 | 0.68 |
| Output (lb./hr.) Kg/hr | (315) 143 | (385) 175 |
| Bulk Density Ratio (Experimental/Commercial) | — | 1.19 |
| Output Ratio (Experimental/Commercial) | — | 1.22 |

Example 12

Comparative Example I of US—A—2,840,549

Into a bottle reactor containing the desired amount of water, i.e. 2:1 water-monomer ratio, is introduced lauryl peroxide as a polymerization catalyst. The desired amount of suspension stabilizer is then weighed into the bottle reactor containing the catalyst and the distilled water.

The amounts of peroxide and suspension agent solution are dictated by the amount of monomer to be used and are indicated in Table III. The resultant water-peroxide-suspension agent mixture is then cooled until ice crystals are observed to prevent decomposition of the peroxide. The desired amount of distilled vinyl chloride monomer is then added, preferably in a slight excess. The excess monomer is allowed to evaporate at room temperature, thereby purging the bottle reactor of air. The bottle is then capped and placed in a temperature controlled polymerizer, where it is maintained for 12 hours at a temperature of about 50°C (122°F) with constant agitation. At the end of this period, the bottle is removed and the polymer examined. The results of a series of such runs are shown in Table III.

TABLE III

Vinylchloride polymerization alkyl phenoxy polyoxyethylene ethanol
as suspension stabilizer

(2:1 Water-Monomer Ratio Lauryl Peroxide Catalyst 15 Hours' Reaction at 50°C (122°F) with Continuous Agitation)

| Run No. | Concentration, Wgt. percent of monomer | | Conversion to polymer percent | Bulk density gms/cm$^3$ |
|---|---|---|---|---|
| | Susp. agent | Catalyst | | |
| 1 | 0.05 | 0.4 | 95.8 | 0.45 |
| 2 | 0.10 | 0.4 | 93.5 | 0.46 |
| 3 | 0.20 | 0.4 | 93.4 | 0.45 |
| 4 | 0.30 | 0.4 | 95.0 | 0.44 |
| 5 | 0.50 | 0.4 | 94.8 | 0.47 |
| 6 | 0.70 | 0.4 | 95.3 | 0.49 |

The preceding examples representing the practice of the herein described and claimed invention process, can be varied, within the context of our total specification disclosure, as it would be construed by one skilled in the art, to achieve essentially the same results with a minimum of routine experimentation and/or optimization.

Our process achieves unexpected results in the field of suspension polymerization of VCM; these results are characterized as follows: (1) a stable suspension system is maintained throughout the polymerization; (2) a controlled and substantially uniform particle sized stable resin is produced; (3) a clean reactor is maintained; and, for example, (4) increased resin extruder through-put, up to 40% can be achieved, this representing a significant factor in terms of extruder efficiency and reduction in energy consumption.

**Claims**

1. A process for the suspension polymerization of vinyl chloride monomer which comprises agitating an aqueous medium having vinyl chloride monomer and a free radical polymerization initiator dispersed therein, heating to initiate polymerization while maintaining agitation to the point of 80 to 95% monomer conversion, stripping residual vinyl chloride monomer and then drying the poly(vinyl chloride) produced, characterised in that process solutions of (1) oil-soluble dispersed ingredients and (2) water-soluble dispersed ingredients are charged to a polymerization reactor, the phase integrity of said solutions being maintained prior to initiating agitation within said reactor, said solution (1) consisting essentially of 100 parts vinyl chloride monomer, and from 0.002 to 0.2 phm of at least one free radical initiator and said solution (2) consisting essentially of 100 to 300 phm water and 0.03 to 3 phm of at least one primary suspending agent and agitation of said solution is then initiated until said initiator is uniformly dispersed therein.

2. A process according to claim 1, wherein solutions (1) and (2) are prepared in separate vessels and then charged to the reactor.

3. A process according to claim 1, wherein solutions (1) and (2) are prepared in separate stages and mixed with a pipeline mixer.

4. A process according to claim 1, 2 or 3 wherein solution (2) also contains from 0.002 to 0.5 phm of at least one chelating agent.

5. A process according to any one of the preceding claims wherein solution (1) also contains from 0.01 to 0.5 phm of at least one secondary suspending agent.

**Patentansprüche**

1. Verfahren zur Suspensionspolymerisation von Vinylchloridmonomer, wobei ein wässriges Medium, welches Vinylchloridmonomer und einen Initiator für die Polymerisation über freie Radikale darin dispergiert enthält, gerührt wird, sodann zur Initiierung der Polymerisation unter fortgesetztem Rühren erhitzt wird bis zur 80-bis 95 %-igen Monomer-Überführung, das restliche Vinylchloridmonomer abgezogen wird und anschließend das hergestellte Polyvinylchlorid getrocknet wird, dadurch gekennzeichnet, daß Verfahrenslösungen von (1) öllöslichen dispergierten Bestandteilen und (2) wasserlöslichen dispergierten Bestandteilen in einen Polymerisationsreaktor eingegeben werden, die Phasenintegrität der Lösungen vor Beginn des Rührens in dem Reaktor beibehalten wird, die Lösung (1) im wesentlichen aus 100 Teilen Vinylchloridmonomer und zu 0,002 bis 0,2 phm aus mindestens einem Initiator für die Polymerisation über freie Radikale besteht und die Lösung (2) im wesentlichen aus 100 bis 300 phm Wasser und 0,03 bis 3 phm mindestens eines primären Suspendiermittels besteht, und das Rühren der Lösung sodann begonnen wird bis der Initiator darin einheitlich dispergiert ist.

2. Verfahren nach Anspruch 1, worin die Lösungen (1) und (2) in gesonderten Gefäßen hergestellt werden und sodann in den Reaktor eingegeben werden.

3. Verfahren nach Anspruch 1, worin die Lösungen (1) und (2) in getrennten Stufen hergestellt werden und mit einem Pipeline-Mixer vermischt werden.

4. Verfahren nach Anspruch 1, 2 oder 3, worin die Lösung (2) ebenfalls von 0,002 bis 0,5 phm mindestens eines Chelierungsmittels enthält.

5. Verfahren nach einem der voranstehenden Ansprüche, worin die Lösung (1) ebenfalls 0,01 bis 0,5 phm mindestens eines sekundären Suspendiermittels enthält.

**Revendications**

1. Procédé pour la polymérisation en suspension du chlorure de vinyle monomère, dans lequel on agite un milieu aqueux à l'intérieur duquel sont dispersés le chlorure de vinyle monomère et un initiateur de polymérisation à radicaux libres, on chauffe pour déclencher la polymérisation tout en maintenant l'agitation jusqu'au point où l'on atteint une conversion de 80 à 95% du monomère, on strippe le chlorure de vinyle monomère résiduel et ensuite on sèche le poly(chlorure de vinyle) produit, caractérisé en ce que les solutions (1) d'ingrédients dispersés solubles dans l'huile et (2) d'ingrédients dispersés solubles dans l'eau sont chargées dans un réacteur de polymérisation, l'intégrité des phases de ces solutions étant maintenues avant le début de l'agitation à l'intérieur du réacteur, la solution (1) comportant essentiellement 100 parties de chlorure de vinyle monomère et de 0,002 à 0,2 pcm d'au moins un initiateur à radicaux libres et la solution (2) comportant essentiellement 100 à 300 pcm d'eau et 0,03 à 3 pcm d'au moins un agent de mise en suspension primaire, l'agitation de cette solution étant déclenchée ensuite jusqu'à ce que l'initiateur y soit uniformément dispersé.

2. Procédé selon la revendication 1, dans lequel les solutions (1) et (2) sont préparées dans des cuves séparées et sont ensuite chargées dans le réacteur.

3. Procédé selon la revendication 1, dans lequel les solutions (1) et (2) sont préparées dans des stades séparés et mélangées dans un mélangeur intégré.

4. Procédé selon la revendication 1, 2 ou 3, dans lequel la solution (2) contient également de 0,002 à 0,5 pcm d'au moins un agent chélatant.

5. Procédé selon l'une quelconque des revendications précédentes, dans lequel la solution (1) contient également de 0,01 à 0,5 pcm d'au moins un agent de mise en suspension secondaire.